# EUROPEAN PATENT APPLICATION

(11) **EP 4 637 003 A1**
(43) Date of publication of application: **22.10.2025**
(21) Application number: 24180110.9
(22) Date of filing: 05.06.2024
(51) Int. Cl.: H02K 16/04, H02K 7/02, F16F 15/31

(54) **ROTATING ELECTRICAL MACHINE AND OPERATING METHOD THEREOF**

(30) Priority: 19.04.2024 US 202418640312
(71) Applicant: Chen, Feng-Tien, Taichung City 407 (TW)
(72) Inventor: Chen, Feng-Tien, Taichung City 407 (TW)
(74) Representative: Straus, Alexander

(57) **Abstract**

A rotating electrical machine (100) comprises a frame (10), a rotating device (20), a first stator (30), a second stator (40), and a flywheel (60). The rotating device (20), along with the first stator (30) and the second stator (40), is accommodated inside the frame (10). The rotating device (20) consists of a rotor (21) and a shaft (23) fixed at the center of the rotor (21). The rotor (21) rotates by electromagnetically interacting with the first stator (30) and the second stator (40). The shaft (23) rotates simultaneously with the rotor (21). The flywheel (60) is coupled to the shaft (23) and is driven by it. Thus, the rotating electrical machine (100) can operate in either energy storage or energy release mode. And an operating method for the rotating electrical machine (100).

## Description

### FIELD

The invention relates to energy storage systems, and particularly to a rotating electrical machine and an operating method thereof for a flywheel energy storage system.

### BACKGROUND

Flywheel energy storage technology has played a significant role in recent years due to its advantages, including fast start-up capacity, low maintenance cost, long lifespan, pollution-free operation, high energy storage capacity, fast charging, and infinite charge/discharge cycles. A known flywheel energy storage system disclosed in US Patent No. 4,612,494 involves a dynamoelectric machine connected to a power source and operating as an electric motor. The rotating shaft of the dynamoelectric machine is connected to a flywheel, while the other end of the shaft is mounted with a permanent magnet generator. This generator operates using the energy stored in the flywheel to generate electric power. However, this approach has disadvantages. It requires connecting both a motor and a generator to the flywheel's ends, complicating the construction and increasing maintenance difficulty. Additionally, this system does not effectively address the issue of the flywheel's rotation speed gradually slowing down as its rotational kinetic energy is converted into electrical energy.

Another flywheel energy storage system is described in US Patent No. 10,122,240. This system features a flywheel with an integrated generator structure and two motors: a first motor to drive the flywheel to a specific rotation speed and a second motor to maintain the flywheel's operation at a low energy consumption level. This setup allows the generator structure to produce electrical energy. However, this system also has its drawbacks: its overall structure is complex, and it fails to address the issue of the flywheel rotating slowly after kinetic energy conversion.

### SUMMARY

The inventor has recognized that by simplifying the components used in flywheel energy storage systems and replenishing stored energy as needed, numerous benefits can be achieved. These benefits include reducing energy loss during conversion and releasing energy in a more stable manner.

According to the invention, the components used in a flywheel energy storage system are simplified by using a rotating electrical machine. The rotating electrical machine comprises a frame, a rotating device, a first stator, a second stator, and a flywheel. The rotating device, the first stator, and the second stator are respectively accommodated inside the frame. The rotating device includes a rotor with a shaft fixed at its center. The rotor is configured to rotate by electromagnetically interacting with the first and second stators. The shaft rotates together with the rotor. The flywheel is coupled to the shaft and is driven by it. As a result, the rotating electrical machine can operate in either an energy storage mode or an energy release mode.

In a particular embodiment of the invention, the first stator, which has first input and/or output ends, and the second stator, which has second input and/or output ends, are arranged in sequence and spaced apart along the axis of the shaft of the rotating device to share its rotor. To elaborate, when the input ends of both the first and second stators are connected to an external power supply simultaneously, the rotating electrical machine operates in energy storage mode. However, when the input ends of both the first and second stators are disconnected from the external power supply, the rotating electrical machine can output electrical energy through the output ends of the first and second stators, i.e., operating in energy release mode. When only the input end of the first stator is connected to the external power supply, the rotating electrical machine can output electrical energy through the output end of the second stator, i.e., operating in both energy storage and release modes at the same time.

In one aspect of the invention, the flywheel is designed to have a variable moment of inertia to address the issue of decreasing flywheel speed when its energy is released. To achieve a variable moment of inertia, the flywheel comprises a disc-shaped body coupled to the shaft of the rotating device, a pair of ball screw devices, and a pair of masses. Each of the ball screw devices includes a screw shaft and a pair of ball nuts. The screw shaft is radially pivoted within the disc-shaped body and has a middle section, a left section with forward threads, and a right section with reverse threads. One of the two ball nuts is screwed onto the left section of its respective screw shaft, and the other ball nut is screwed onto the right section, allowing each ball nut to move back and forth between a starting position and an ending position. One of the masses is coupled to the ball nuts screwed onto the left sections of the screw shafts, and the other mass is coupled to the ball nuts screwed onto the right sections. This allows the masses to approach or move away from the middle section synchronously, altering the moment of inertia of the flywheel. Consequently, the rotating speed of the flywheel can be detected by observing the change in moment of inertia, which helps determine the mode in which the rotating electrical machine should operate.

In some embodiments of the invention, the flywheel further comprises a spring device. The spring device is arranged between the masses so that it stretches when the masses move apart and retracts when they come closer together. This helps to stabilize the movement of the masses.

In another aspect of the invention, an operating method for the rotating electrical machine is provided. The method comprises the following steps: preparing the rotating electrical machine as disclosed above; connecting the first and second stators to an external power supply to drive the flywheel to a certain rotational speed; disconnecting the first and second stators or only the second stator from the external power supply to operate the rotating electrical machine in energy release mode or in both energy storage and release modes simultaneously, and reconnecting the first and second stators or only the second stator to the external power supply when the moment of inertia of the flywheel is reduced to a certain value to operate the rotating electrical machine in energy storage mode.

### BRIEF DESCRIPTION OF THE DRAWINGS

Other features and advantages of the invention will become readily apparent to those skilled in the art from the following detailed description of the embodiments in the light of the accompanying drawings, in which:
FIG. 1 is a perspective view of a first embodiment of the invention;
FIG. 2 is a cross-sectional view taken along the direction 2-2 of FIG. 1;
FIG. 3 is partially exploded view of the first embodiment of the invention shown in FIG. 1;
FIG. 4 is another partially exploded view of the first embodiment of the invention shown in FIG. 1;
FIG. 5 is a partially exploded perspective view of the flywheel of the first embodiment of the invention shown in FIG. 1;
FIG. 6 is a top view of some parts assembled of the flywheel shown in FIG. 5;
FIG. 7 is a top view of some parts assembled of the flywheel shown in FIG. 5, when the two masses thereof approach to each other;
FIG. 8 is a top view of some parts assembled of the flywheel shown in FIG. 4, when the two masses thereof move away from each other;
FIG. 9 is a schematic diagram of the electrical connection between the first embodiment of the invention shown in FIG. 1 and an external power supply during operation.
FIG. 10 is a partially exploded perspective view of the flywheel of a second embodiment of the invention;
FIG. 11 is a top view of some parts assembled of the flywheel shown in FIG. 10;
FIG. 12 is a top view of some parts assembled of the flywheel shown in FIG. 10, when the two masses thereof approach to each other; and
FIG. 13 is a cross-sectional view of the rotor of a third embodiment of the invention.

### DETAILED DESCRIPTION

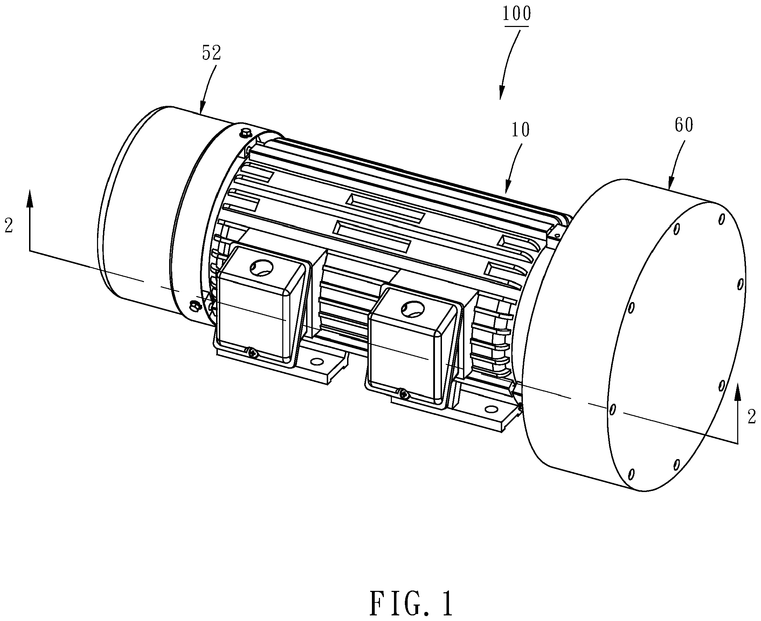

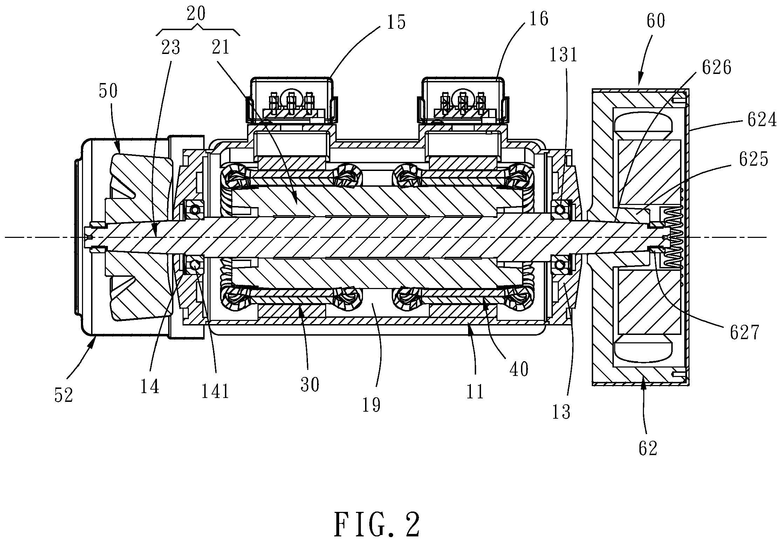

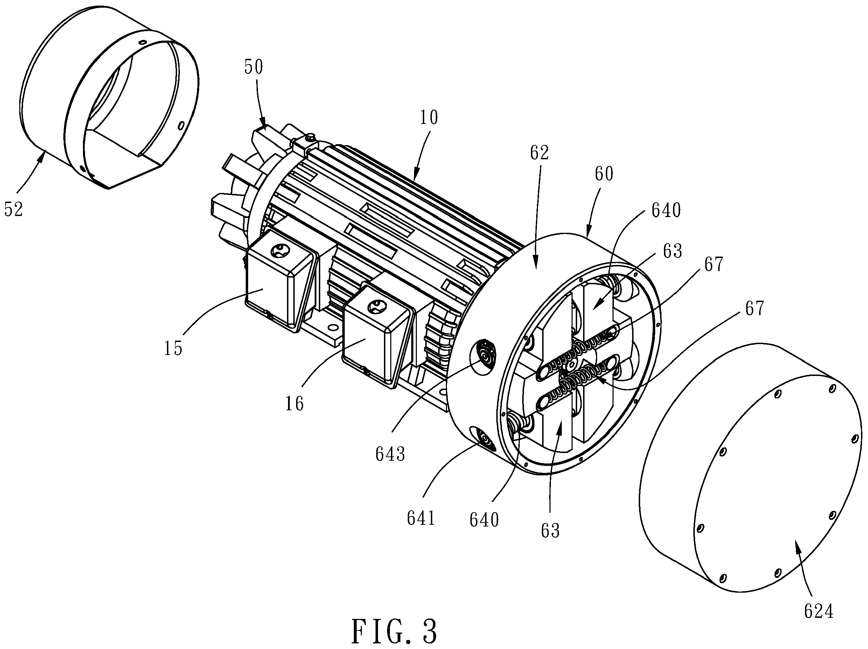

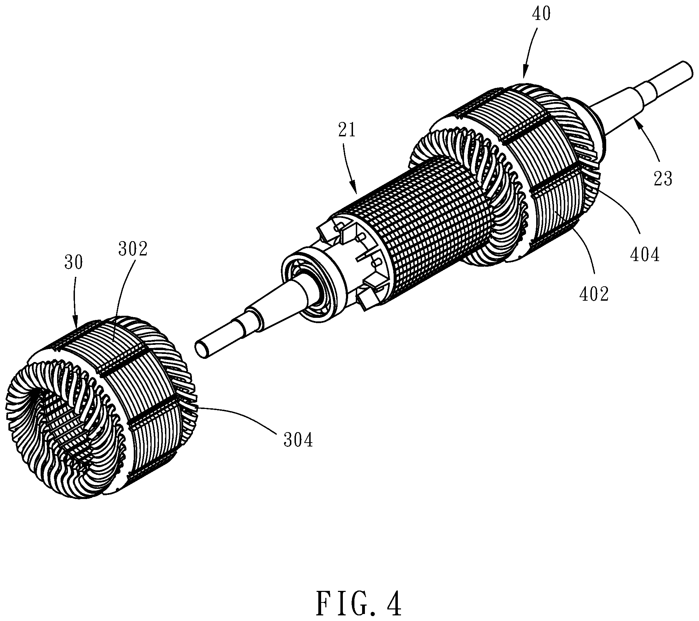

Referring FIG. 1 to FIG.4, a rotating electrical machine embodied according to the invention is shown at 100.The rotating electrical machine 100 comprises a frame 10, a rotating device 20, a first stator 30, a second stator 40, a cooling fan 50 and a flywheel 60.

The frame 10 includes a casing 11, a first bearing seat 13, a second bearing seat 14, a first connection box 15, and a second connection box 16. The first bearing seat 13, which holds a first bearing 131, and the second bearing seat 14, which holds a second bearing 141, are respectively mounted on both ends of the casing 11 to define a receiving space 19. The first connection box 15 and the second connection box 16 are fixed on the surface of the casing 11.

The rotating device 20, in this embodiment, includes a rotor 21 and a shaft 23. The rotor 21 has a core portion stacked with multiple silicon-steel sheets to serve as a magnetic flux path, and it is disposed in the receiving space 19. The shaft 23 is fixed to the center of the rotor 21. The first end of the shaft 23 is pivotally connected to the first bearing 131 and extends outside of the casing 11, while the second end of the shaft 23 is pivotally connected to the second bearing 141 and also extends outside of the casing 11.

The first and second stators 30, 40 each include a first and second stator body 302, 402, made from a plurality of annular silicon-steel sheets, and a first and second stator winding unit 304, 404 installed within the first and second stator bodies 302, 402. In this embodiment, the first and second stators 30, 40 are respectively fixed in the casing 11 and positioned in the receiving space 19 such that they are spaced apart from each other by a predetermined distance and form an air gap with the rotor 21. The cooling fan 50 is coupled to the first end of the shaft 23 and driven by it. In another embodiment, the cooling fan 50 may also be another flywheel with the same structure as the flywheel 60. In this embodiment, the frame 10 includes an end cover 52 to enclose the cooling fan 50.

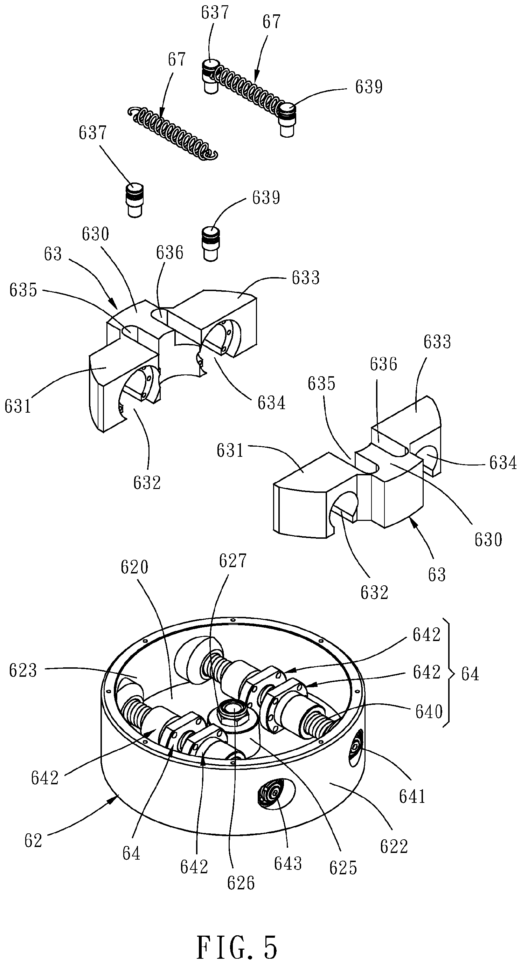

Next, referring to FIG.5 to FIG.7, the flywheel 60 comprises a disc-shaped body 62, a pair of masses 63, and a pair of ball screw devices 64.

The body 62 includes a base plate 620, an annular wall 622 extending upward from the periphery of the base plate 620, a receiving space 623 defined by the base plate 620 and the annular wall 622, and an outer cover 624 fixed to the upper end of the annular wall 622. The base plate 620 has a convex ring 625 extending inward along its axis and an axis hole 626. When assembled, the first end of the shaft 23 penetrates the convex ring 625 through the axis hole 626 and is then secured with a nut 627.

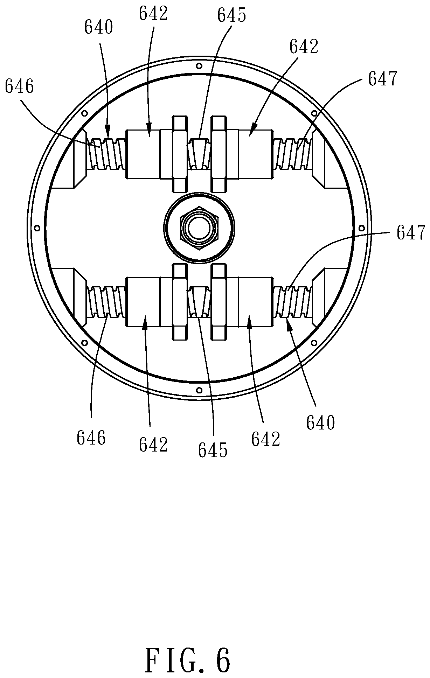

Each of the ball screw devices 64 has a screw shaft 640 and a pair of ball nuts 642. The screw shafts 640 are received in the receiving space 623 at intervals and radially fixed on the annular wall 622 by first bearings 641 and second bearings 643. Each of the screw shafts 640, as shown in FIG.6, has a middle section 645, a left section 646 having forward threads, and a right section 647 having reverse threads. The right section 647 is the same length as the left section 646. One of the two nuts 642 is attached to the left section 646, and the other ball nut 642 is attached to the right section 647, allowing each ball nut 642 to move back and forth between a starting and ending position.

Each of the masses 63 has a central portion 630, a left wing portion 631 with a left recess 632, and a right wing portion 633 with a right recess 634. When assembled, the ball nuts 642 screwed to the left sections 646 of the screw shafts 640 are received in the left recess 632 and the right recess 634 of one of the masses 63, while the ball nuts 642 screwed to the right sections 647 of the screw shafts 640 are received in the left recess 632 and the right recess 634 of the other mass 63. This arrangement allows the masses 63 to move synchronously with the ball nuts 642

In this embodiment, the flywheel 60 further comprises a pair of springs 67. The central portion 630 of each mass 63 is provided with a left groove 635 and a right groove 636. One end of each spring 67 is fixed in the left groove 635 of one mass 63 by a first pin 637, while the other end is fixed in the left groove 636 of the other mass 63 by a second pin 639. Thereby, the springs 67 assist in the back-and-forth displacement speed of the masses.

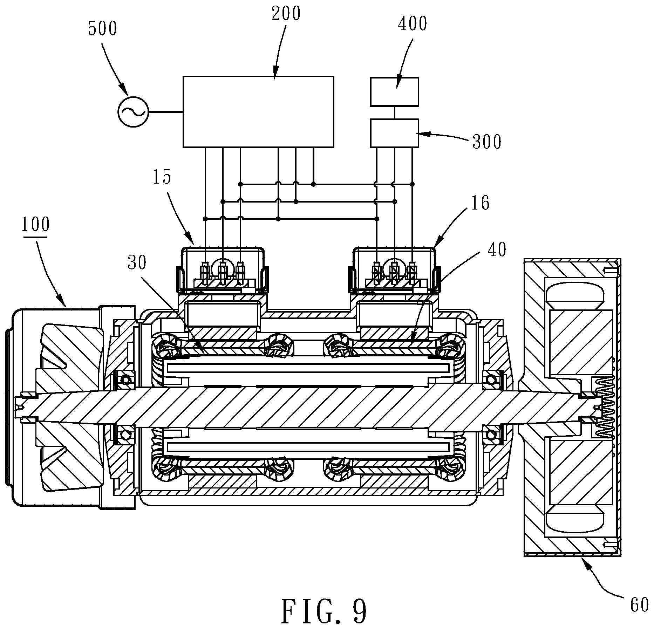

The following is a detailed description of the operation of the rotating electrical machine 100. Please referring to FIG. 9, the rotating electrical machine 100 can be operated with a control device 200, a voltage stabilizer 300, and an external load 400.

The input and output ends of the first stator 30 are located in the first connection box 15. The input and output ends of the second stator 40 are located in the second connection box 16. The control device 200 includes an input end connected to an external power supply 500 and an output end connected respectively to the input ends of the first stator 30 and the input end of the second stator 40. The voltage stabilizer 300 has an input end connected to either the output ends of both the first stator 30 and the second stator 40 or only the output end of the second stator 40, and an output end connected to the input end of the external load 400. When the external power supply 500 is turned on, the rotating electrical machine 100 operates in a motor mode, i.e., an energy storage mode, to drive the flywheel 60. Once the flywheel 60 reaches a certain speed, if the input ends of both the first and second stators 30, 40 are disconnected from the external power supply 500, the rotating electrical machine 100 is driven by the flywheel 60 to operate in generator mode. Specifically, the first stator 30 and the second stator 40 cooperate with the rotor 21 to operate in generator mode. If only the second stator 40 is disconnected from the external power supply 500, the rotating electrical machine 100 is also driven by the flywheel 60 to operate in both energy storage and release modes simultaneously. Specifically, the first stator 30 cooperates with the rotor 21 to operate in motor mode, while the second stator 40 cooperates with the rotor 21 to operate in generator mode.

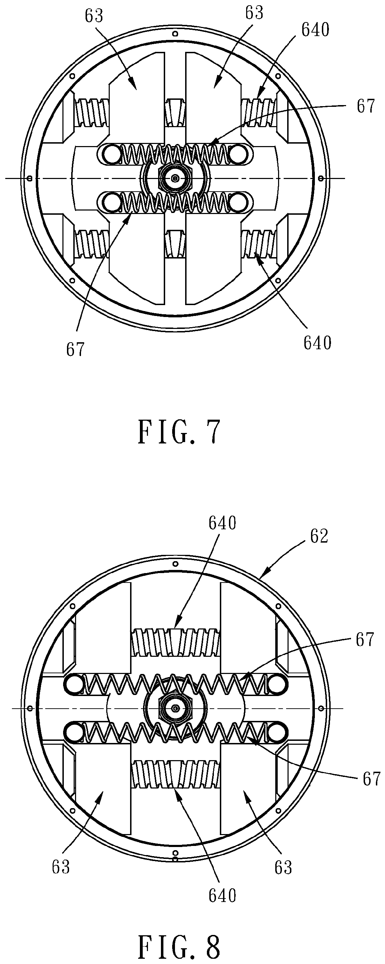

In more detail, before the flywheel 60 is driven, the masses 63 are positioned on the middle sections 645 of the screw shafts 640, which serve as the starting point, as shown in FIG. 7. As the rotation speed of the flywheel 60 gradually increases, the masses 63 are affected by centrifugal force and move synchronously from the starting point to the end point along the screw shafts 640. When the flywheel 60 reaches a certain speed, the masses 63 are located at the end point, as shown in FIG. 8. In this state, since the second stator 40 is disconnected from the external power supply, it will cooperate with the rotor 21 to operate in a generator mode, i.e., an energy release mode. The electric energy generated by the rotating electrical machine 100 is input to the external load 400, such as batteries or capacitors, through the voltage stabilizer 300.

It must be mentioned here that the moment of inertia of the flywheel 60 is variable. When the moment of inertia reduces to a predetermined value during the energy release process, the control device 200 will detect this value and reconnect the second stator 40 to the external power supply 500. This allows the rotating electrical machine 100 to operate in energy storage mode, thereby maintaining stability in the output electrical energy.

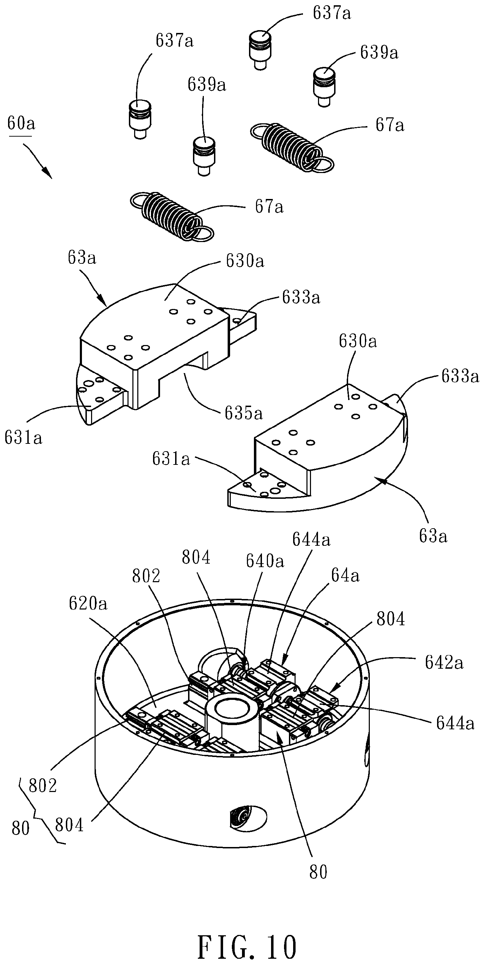

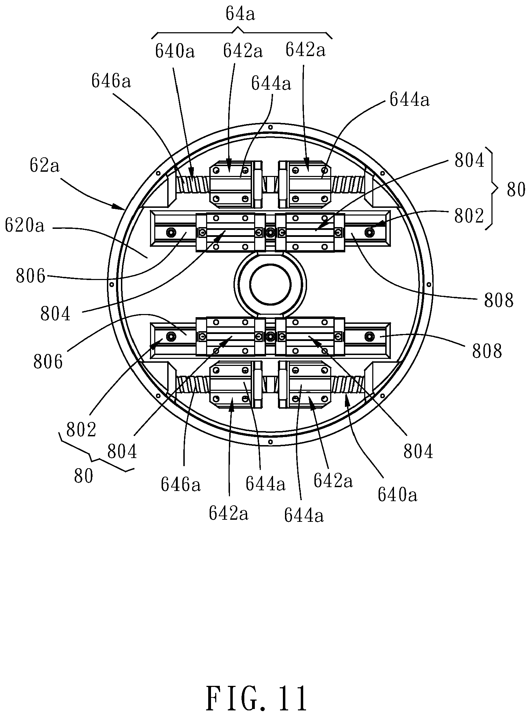

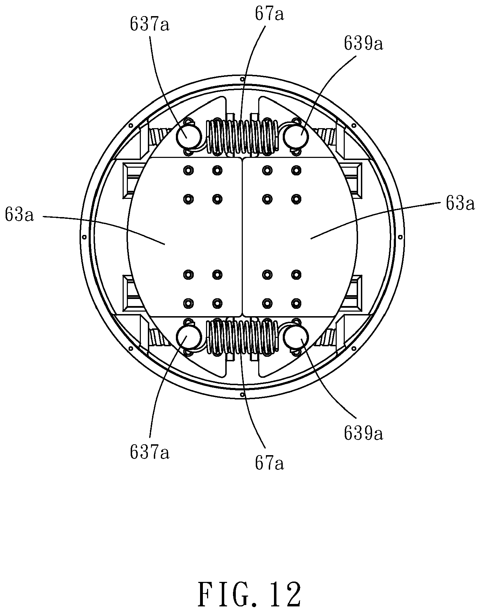

Referring to FIG. 10 to FIG. 12, a flywheel according to another embodiment of the invention is shown as 60a. The difference between the flywheel 60a and the flywheel 60 lies in the inclusion of a pair of linear guide devices 80. Each linear guide device 80 comprises a track member 802 with a fist section 806 and a second section 808, and a pair of moving member 804 respectively coupled to the first section 806 and the second section 808. The track member 802 is fixed on the base plate 620a parallel to and adjacent to the screw shaft 640a of the ball screw device 64a. The moving member 804 is assembled to the track member 802 with a plurality of balls serving as rolling elements (not shown in the FIGS.).

Each mass 63a includes a central portion 630a with an opening recess 635a, a left wing portion 631a, and a right wing portion 633a. The moving members 804 on one side of the track members 802 are received and fixed in the opening recess 635a of one mass 63a. Similarly, the moving members 804 on the other side of the track members 802 are received and fixed in the opening recess 635a of the other mass 63a.

In this embodiment, each ball nut 642a has an upper portion 644a. When assembled, the ball nuts 642a screwed onto the left sections 646a of the screw shafts 640a are fixed to the left wing portion 631a and the right wing portion 633a of one mass 63a by their upper portions 644a. Similarly, the ball nuts 642a screwed onto the right sections 647 of the screw shafts 640a are fixed to the left wing portion 631a and the right wing portion 633 a of the other mass 63a by their upper portions 644a.

Additionally, the flywheel 60a includes a pair of springs 67a. One end of each spring 67a is fixed to the left wing portion 631a of one mass 63a with a first pin 637a, while the other end is fixed to the left wing portion 631a of the other mass 63a with a second pin 639a. Therefore, even when the weight of the mass 63a is greater than that of the mass 63, the mass 63a can move smoothly back and forth between the starting point and the end point with the assistance of the springs 67a.

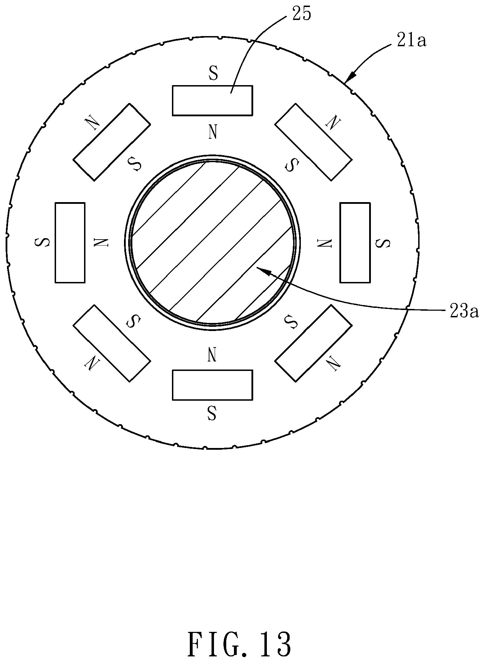

In addition, according to another aspect of the invention, the rotor can include a plurality of permanent magnet pieces, such as 4, 6, 8, or 12. The permanent magnet pieces can be positioned on a certain part or the entire core portion of the rotor. As shown in FIG. 13, a rotor 21a of one embodiment has eight permanent magnet pieces 25. Each permanent magnet piece 25 is spacedly disposed around the shaft 23a on a part of the core portion of the rotor 21a corresponding to the second stator 40, and the magnetic pole of each permanent magnet piece 25 is opposite to that of the adjacent permanent magnet piece. Therefore, the magnetic flux density of the rotor can be increased and stabilized, improving the electrical power generation efficiency of the rotating electrical machine.

## Claims

1. A rotating electrical machine (100) comprising:
a frame (10);
a rotating device (20) including a rotor (21) and a shaft (23) fixed to the center of the rotor (21);
**characterized in that**:
the rotating electrical machine (100) further comprises:
a first stator (30);
a second stator (40);
a flywheel (60) coupled to one end of the shaft (23) and driven thereby, and
the rotating device (20), the first stator (30) and the second stator (40) being respectively accommodated inside the frame (10) in a way that the rotor (21) is configured to rotate by electromagnetically interacting with the first stator (30) or/and the second stator (40), and the shaft (23) rotates together with the rotor (21).

2. The rotating electrical machine (100) of claim 1, further comprises a cooling fan (50) or another flywheel (60) coupled to the opposite end of the shaft (23) and driven thereby.

3. The rotating electrical machine (100) of claim 1, wherein the first stator (30) and the second stator (40) are arranged in sequence and spaced apart along the axis of the rotating shaft (23) to share the rotor (21).

4. The rotating electrical machine (100) of claim 1, wherein the rotor (21) includes a plurality of permanent magnet pieces (25) disposed on either a certain part or the entire core portion.

5. The rotating electrical machine (100) of claim 4, wherein each permanent magnet piece (25) is spacedly disposed around the shaft (23), and the magnetic pole of each permanent magnet piece (25) is opposite to that of the adjacent permanent magnet piece (25).

6. The rotating electrical machine (100) of claim 3, wherein the first stator (30) includes a first input and/or output end, and the second stator (40) includes a second input and/or output end, thereby when both the first stator (30) and the second stator (40) are connected to an external power supply (500) through their respective input ends, the rotating electrical machine (100) operates in the energy storage mode, conversely, when only the first input end of the first stator (30) is connected to the external power supply (500), the rotating electrical machine (100) can output electrical energy through the second output end of the second stator (40).

7. The rotating electrical machine (100) of claim 1, wherein the flywheel (60) comprises a disc-shaped body (62) coupled to the shaft (23) of the rotating device (20), a pair of ball screw devices (64) and a pair of masses (63); each of the ball screw devices (64) includes a screw shaft (640) and a pair of ball nuts (642), the screw shaft (640) is radially pivoted within the disc-shaped body (62) and has a middle section (645), a left section (646) having forward threads, and a right section (647) having reverse threads, one of the two ball nuts (642) is screwed to the left section (646) and the other ball nut (642) is screwed to the right section (647), allowing each of the ball nuts (642) can move back and forth between a starting position and an ending position; and one of the masses (63) is coupled to the ball nuts (642) screwed to the left sections (646) of the screw shafts (640) and the other mass is coupled to the ball nuts (642) screwed to the right sections (647) of the screw shafts (640) so that the masses (63) can approach or move away from the middle section (645) synchronously, thereby allowing the moment of inertia of the flywheel (60) to be variable.

8. The rotating electrical machine (100) of claim 7, wherein the flywheel (60) further comprises a spring device (67) arranged between the masses (63) in a way that it can be stretched when the masses (63) are moved away from each other and retracted when they are approached to each other.

9. The rotating electrical machine (100) of claim 7, wherein the body includes a base plate (620), an annular wall (622) extending upward from the periphery of the base plate (620), and a receiving space (623) defined by the base plate (620) and the annular wall (622) for receiving the ball screw devices (64) and the masses (63).

10. The rotating electrical machine (100) of claim 9, wherein each of the masses (63) has a left wing portion (631) with a left recess (632), and a right wing portion (633) with a right recess (634), the ball nuts (642) screwed to the left sections (646) of the screw shafts (640) are respectively received in the left recess (632) and the right recess (634) of one of the masses (63) and the ball nuts (642) screwed to the right sections (647) of the screw shafts (640) are respectively received in the left recess (632) and the right recess (634) of the other mass (63), thereby the masses (63) can move synchronously with the ball nuts (642).

11. The rotating electrical machine (100) of claim 10, wherein the flywheel (60) further comprises a first and second springs (67) and each of the masses (63) has a left groove (635) and a right groove (636), one end of the first spring (67) is fixed in the left groove (635) of one of the masses (63) using a first pin (637), and the other end of the first spring (67) is fixed in the left groove (635) of the other mass (63) using a second pin (639), and one end of the second spring (67) is fixed in the right groove (636) of one of the masses (63) using another first pin (637), and the other end of the second spring (67) is fixed in the right groove (636) of the other mass (63) using another second pin (639).

12. The rotating electrical machine (100) of claim 10, wherein the flywheel (60a) further includes a pair of linear guide devices (80), each of the linear guide devices (80) includes a track member (802) fixed on the base plate (620a) parallel to and adjacent to the screw shaft (640a) of the ball screw device (64a) and a moving member (804) assembled to the track member (802) through intermediation of a plurality of balls being rolling elements, and the moving members (804) located on one side of the track members (802) are fixed in one of the masses (63a), the moving members (804) located on another side of the track members (802) are fixed in the other mass (63a).

13. An operating method of the rotating electrical machine (100) characterized comprising the following steps:
preparing a rotating electrical machine (100) of any one of claims 1 to 13;
connecting the first stator (30) and the second stator (40) to an external power supply (500) to drive the flywheel (60) to a certain rotational speed;
disconnecting the first stator (30) and the second stator (40) or only the second stator (40) from the external power supply (500) to operate the rotating electrical machine (100) in energy release mode or in both energy storage and release modes simultaneously; and
reconnecting the first stator (30) and the second stator (40) or only the second stator (40) to the external power supply (500) when the moment of inertia of the flywheel (60) is reduced to a certain value to operate the rotating electrical machine (100) in energy storage mode.

14. The operating method of the rotating electrical machine (100) of claim 13, further comprising a step of preparing a control device (200) including an input end connected to an external power supply (500) and an output end connected to the input end of the first stator (30) and the input end of the second stator (40) to control the electrical connection between the first stator (30) and the second stator (40) and the external power supply (500).

15. The operating method of the rotating electrical machine (100) of claim 14, further comprising a step of preparing a voltage stabilizer (300) including an input end connected to the output end of the second stator (40) and an output end connected to an outer loading.
